# EUROPEAN PATENT SPECIFICATION

(11) **EP 2 903 354 B1**
(45) Date of publication and mention of the grant of the patent: **29.11.2017**
(21) Application number: 14305131.6
(22) Date of filing: 30.01.2014
(51) Int. Cl.: H04W 52/24, H04W 52/40

(54) **Wireless telecommunications network nodes and methods**
Drahtlose Telekommunikationsnetzwerkknoten und Verfahren
Noeuds de réseau de télécommunications sans fil et procédés

(43) Date of publication of application: 05.08.2015
(73) Proprietor: ALCATEL LUCENT, 92100 Boulogne-Billancourt (FR)
(72) Inventor: Brend, Graham, Swindon, Wiltshire SN5 7DJ (GB); Puddle, Nicola, Swindon, Wiltshire SN5 7DJ (GB); Wong, Shin Horng, Swindon, Wiltshire SN5 7DJ (GB)
(74) Representative: Berthier, Karine

(56) References cited:
- WO-A1-2012/002895
- US-A1- 2012 178 493
- "3rd Generation Partnership Project; Technical Specification Group Radio Access Network; Study on UMTS heterogeneous networks (Release 12)", 3GPP STANDARD; 3GPP TR 25.800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.1.0, 20 December 2013 (2013-12-20), pages 1-165, XP050729149, [retrieved on 2013-12-20]

## Description

### FIELD OF THE INVENTION

The present invention relates to wireless telecommunications network nodes, methods and computer program products.

### BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. Abase station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

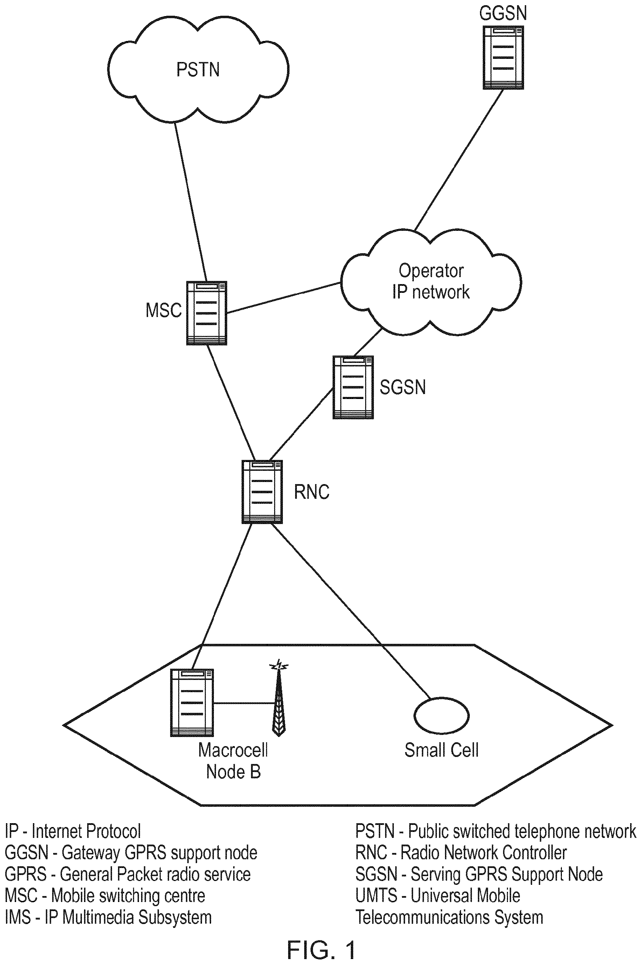

Traditional base stations provide coverage in relatively large geographical areas and those cells are often referred to as macro cells. It is possible to provide a heterogeneous network (HetNet) where smaller-sized cells are provided within macro cells, as illustrated in Figure 1. Such smaller sized cells are sometimes referred to as low-power nodes (LPN), micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

3rd Generation Partnership Project; Technical Specification Group Radio Access Network; Study on UMTS heterogeneous networks (Release 12), 3GPP STANDARD; 3GPP TR 25.800, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. V12.1.0, 20 December 2013 (2013-12-20), pages 1-165, is a study document on UMTS heterogeneous networks. Solutions and techniques are disclosed for co-channel scenarios where there is an uplink/dawnlink mismatch region between a macro cell and low power node. A user equipment has its uplink transmit power controlled by both the macro node B and the low power node.

US 2012/0178493 A1 discloses a method and apparatus for controlling transmit power in a mobile wireless device connected simultaneously to two or more cells in a tireless network. A scenario can occur where the difference in signal power at two different cells generated by different nodeBs can result in an amount of SIR available at a cell to be below the minimum required to successfully decode packets transmitted over a high speed E-DCH data connection. To manage transmit power control in a UE more effectively, a change in how the UE can respond to transmit power control commands can be used. When one connection between the UE to a first cell uses a higher speed data service connection and a second connection exists to a second cell that does not provide a higher speed data service connection, the UE can execute transmit power control commands received from the E-DCH cell and ignore some or all of the power control commands received from the non E-DCH cell.

Although HetNet deployments may offer advantages, unexpected consequences of such deployments may occur. It is desired to address those consequences.

### SUMMARY

According to a first aspect, there is provided a macro base station for a wireless telecommunications network, comprising: power control logic operable to determine whether user equipment supported by a macro cell provided by the macro base station is configured to accept power control messages from both the macro base station and another base station and that a quality of transmissions received from the user equipment by the macro base station fails to exceed a quality threshold and, if so, to transmit an ignore power control message to the user equipment instructing the user equipment to ignore power control messages from the another base station.

The first aspect recognises that small cells are often deployed within the coverage area of a macro cell so as to improve the capacity of the network. Such small cells would typically be deployed at "hot spots", which are locations within the macro cellular network where there is significant user equipment activity and hence deploying additional base stations at these locations can improve the overall capacity of the network, since more user equipment can be served and fewer will be refused service due to a lack of network resource.

However a key consideration with HetNet deployments is how to successfully integrate macro & small cells without each causing issues for the other, or for user equipment within the HetNet. For example a significant issue to consider is that the macro cells will be transmitting at a considerably higher power than small cells that might be located within the macro cell's coverage area. Thus the resulting difference in transmission power between the macro & small cells will result in an interference environment for user equipment that is different from that experienced in networks solely with macro cells deployed and can cause issues for user equipment as they roam through the HetNet. Such interference issues are exacerbated when the small cells are deployed using the same frequency as the macro cells (co-channel deployment).

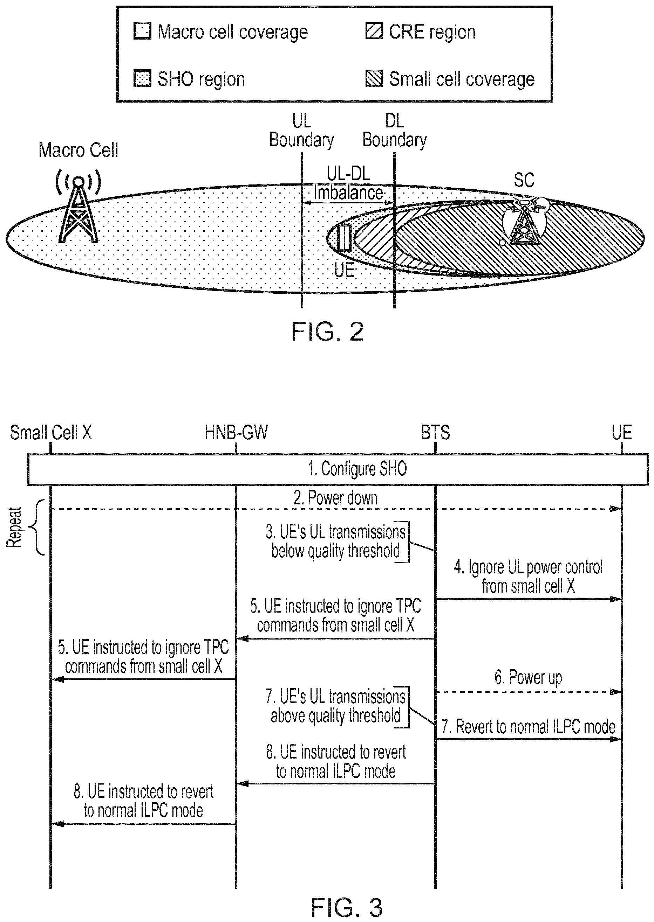

One of the main issues with co-channel interference is that a so-called "uplink-downlink" imbalance can be experienced by user equipment at various points in the HetNet since the uplink signal received from a user equipment at each node is not dependent on the downlink transmission power of the nodes. Figure 2 provides a simple illustration of the uplink-downlink imbalance region. For example, at the optimal uplink handover border, the user equipment path loss to the macro cell and small cell is the same. So, from an uplink point of view, this would be the place where the user equipment's serving cell should be changed from the macro cell to the small cell. However, because the downlink transmission powers of the base stations are not equal, the downlink signal received from the macro cell at this border is stronger than that from the small cell. So, from this point of view, the user equipment's serving cell should not be changed to the small cell.

Similarly, at the optimal downlink handover border, the common pilot channel (CPICH) receives power of the pilot signals transmitted by the macro cell & small cell is the same. Hence, from a downlink point of view, the user equipment's serving cell should be changed from the small cell to the macro cell. However the user equipment path loss to the macro cell is much greater than to the small cell, i.e. the signal received from the UE at the macro cell and small cell is not the same. So, from an uplink point of view, the user equipment's serving cell should not be changed from the small cell to the macro cell.

These inequalities thus result in a region between these two borders where there is an imbalance in the uplink and downlink for user equipment located within that region.

User equipment in the uplink-downlink imbalance region that is connected to the macro cell will create strong interference to the small cell. This scenario is applicable to both long term evolution (LTE) and universal mobile telecommunication system (UMTS) radio access technologies.

User equipment that is in the uplink-downlink imbalance region will typically have contexts in both the macro cell and the associated small cell. For example, if it is in soft handover (SHO), the macro cell is the serving cell and the small cell is the non-serving cell. One approach to mitigate the uplink-downlink imbalance is to "decouple" the uplink & downlink for user equipment, such that the macro base station to which a user equipment is "anchored" is not responsible for determining the uplink budget allocation for user equipment. Instead, a small cell that is a member of the user equipment's active set is given this responsibility and the macro cell continues to provide the downlink resources for the user equipment. Thus both the macro cell & the small cell will manage the user equipment's resources.

In normal operation, the user equipment will respond to any received command to control its transmit power. When the user equipment is in the uplink-downlink imbalance region and in soft handover, or when its uplink and downlink are decoupled, both the small cell and the macro cell will attempt to "control" the user equipment's uplink power. For example, when in soft handover and located close to the small cell, the user equipment's uplink power control will be dominated by the small cell, which would normally lead to the user equipment being instructed to reduce its uplink power. An essential uplink control channel, the High Speed-Dedicated Physical Control Channel (HS-DPCCH) and associated control information, containing for example an indication of the quality of the downlink channel received by the user equipment and acknowledgement information will, however, only be received by the macro cell. However, due to the small cell dominating the user equipment's uplink power, the power may be reduced to a level that such control channel/information cannot be received correctly by the macro cell, which significantly impacts performance. Similarly, when the user equipment's uplink and downlink are decoupled, the HS-DPCCH power transmitted by the user equipment has to be sufficient for it to be received by the macro cell base station.

As well as providing an acknowledgement from the user equipment, the HS-DPCCH and associated control information also provide feedback on the actual quality of the downlink signal received by the user equipment from the macro cell. It is important for the macro cell to efficiently configure the user equipment's downlink transmissions and, hence, the macro cell needs to receive good quality feedback from the user equipment, particularly since such feedback is used by the macro cell to set its downlink resources (for example, transmit power, codes & packet size) appropriately and, without reliable a ACK/NACKfrom the user equipment, the downlink communication would fail.

Accordingly, addressing issues related to sub-optimal power control of user equipment in the uplink-downlink imbalance region of HetNets is important, in order to ensure that such networks are optimally configured.

One known proposal is for the radio network controller (RNC) to disable power control on the small cell for legacy user equipment either by removing the small cell from the user equipment's active set, or requiring transmission power control (TPC) commands to always be +1 (i.e. to increase transmission power) from the small cell. However, this requires a centralized function on the RNC to manage and determine whether and when power control needs to be disabled on a small cell.

The first aspect recognises that given the potentially large number of small cells that maybe deployed within a HetNet, introducing a centralized function to make this determination for what could be a significant number of uplink-downlink imbalance regions can be onerous. In addition, disabling the power control on the small cell could have undesirable impacts on the small cell (for example, it could suffer high levels of interference from the associated user equipment). The proposals also assume that a macro and small cell are hosted by the same RNC, which is not always true. In addition no details are given of how the power control could be re-enabled at the small cell.

The first aspect also recognises that it would be helpful to allow a macro cell base station itself to make a determination on how to manage power control of user equipment within an uplink-downlink imbalance region and managing this in a cooperative manner with the impacted small cell would be beneficial.

Accordingly, a macro base station may be provided. The macro base station may comprise power control logic which determines whether user equipment supported by a macro cell provided by the macro base station is configured to accept power control messages from both the macro base station and another base station. The power control logic may also determine that a quality of the transmissions received from the user equipment by the base station does not achieve a specified quality threshold. When the power control logic determines that the user equipment is configured to accept power control messages from the base stations and that the quality of the transmission does not achieve the specified threshold, then the power control logic may transmit an ignore power control message to the user equipment. The ignore power control message may instruct the user equipment to ignore power control messages from the other (the another) base station. In this way, the macro base station is able to prevent the user equipment from having its power controlled by the other base station under certain circumstances. This enables the macro base station to ensure that sufficient quality uplink transmissions are received by the macro base station, thus mitigating any issues that the macro base station might encounter with not being able to receive feedback on the quality of the downlink signals being received by the user equipment from the macro cell.

In one embodiment, the ignore power control message instructs the user equipment to ignore power control messages from the another base station until the user equipment receives a restore power control message instructing the user equipment to respond to power control messages from the another base station. Accordingly, the ignore power control message may specify that the user equipment should fail to respond to power control messages from the other base station until it receives a restore power control message which indicates to the user equipment that it should then respond to power control messages from the other base station. This enables the macro base station to temporarily prevent the other base station from changing the transmission power of the user equipment.

In one embodiment, the ignore power control message instructs the user equipment to ignore power control messages from the another base station until the user equipment receives an indication that the another base station is the user equipment's serving cell. Accordingly, the ignore power control message may specify that the user equipment should respond to the power control messages from the other base station when the base station becomes the user equipment serving cell. This enables control of the transmission power of the user equipment to be transferred to the other base station without requiring a restore power control message to be sent (which may not be possible if the user equipment loses the radio link with the macro base station).

In one embodiment, the ignore power control message instructs the user equipment to ignore power control messages from the another base station which would reduce its transmission power to below a specified threshold amount. Accordingly, the ignore power control message may instruct the user equipment to selectively ignore power control messages from the other base station only when it reduces the transmission power of the user equipment to below a threshold amount. This enables the transmission power of the user equipment to continue to be adjusted, within limits, by the other base station.

In one embodiment, the power control logic is operable, when it is determined the quality of transmissions received from the user equipment by the macro base station exceed the quality threshold, to transmit a restore power control message to the user equipment instructing the user equipment to respond to power control messages from the another base station. Accordingly, when the quality of the transmissions received from the user equipment are of a sufficient quality, a restore power control message maybe transmitted to the user equipment instructing the user equipment to now respond to any power control messages from the other base station.

In one embodiment the power control logic is operable to transmit an indication of the power control message to the another base station. Accordingly, any instructions sent to the user equipment may also be indicated to the other base station in order that the other base station may understand why the user equipment is behaving in the manner instructed by the macro base station.

In one embodiment, the power control logic is operable, in response to receipt of a message from the another base station indicating that the another base station is suffering from interference from the user equipment, to determine whether transmission power of the user equipment can be reduced and, if so, to transmit a reduce power control message to the user equipment. Accordingly, the macro base station may be informed by the other base station that an unacceptable amount of interference is being experienced by the base station as a result of its inability to control the transmission power of the user equipment. If the macro base station is able to, then the macro base station may transmit a reduce power control message to the user equipment to reduce its transmission power and reduce the interference being experienced by the other base station.

In one embodiment, the power control logic is operable, in response to receipt of a message from the another base station indicating that the another base station is suffering from interference from the user equipment, to determine whether transmission power of the user equipment can be reduced and, if not, to initiate handover to the another base station. Hence, when the macro base station is unable to reduce the transmission power of the user equipment any further, then the macro base station may cause the user equipment be handed over to the other base station. This then enables the other base station to set the transmission power appropriately.

In one embodiment, the power control logic is operable to determine that the user equipment is configured to accept power control messages from both the macro base station and another base station when the user equipment is operating in at least one of a soft handover and uplink/ downlink decoupled mode.

According to a second aspect, there is provided a macro base station method, comprising: determining whether user equipment supported by a macro cell provided by the macro base station is configured to accept power control messages from both the macro base station and another base station and that a quality of transmissions received from the user equipment by the macro base station fails to exceed a quality threshold and, if so, transmitting an ignore power control message to the user equipment instructing the user equipment to ignore power control messages from the another base station.

In one embodiment, the ignore power control message instructs the user equipment to ignore power control messages from the another base station until the user equipment receives a restore power control message instructing the user equipment to respond to power control messages from the another base station.

In one embodiment, the ignore power control message instructs the user equipment to ignore power control messages from the another base station until the user equipment receives an indication that the another base station is the user equipment's serving cell.

In one embodiment, the ignore power control message instructs the user equipment to ignore power control messages from the another base station which would reduce its transmission power to below a specified threshold amount.

In one embodiment, the step of transmitting comprises, when it is determined the quality of transmissions received from the user equipment by the macro base station exceed the quality threshold, transmitting a restore power control message to the user equipment instructing the user equipment to respond to power control messages from the another base station.

In one embodiment, the step of transmitting comprises transmitting an indication of the power control message to the another base station.
In one embodiment, the method comprises the step of receiving a message from the another base station indicating that the another base station is suffering from interference from the user equipment, determining whether transmission power of the user equipment can be reduced and, if so, transmitting a reduce power control message to the user equipment.
In one embodiment, when the step of determining determines that transmission power of the user equipment can not be reduced the method comprises the step of initiating handover to the another base station.
In one embodiment, the step of determining determines that the user equipment is configured to accept power control messages from both the macro base station and another base station when the user equipment is operating in at least one of a soft handover and uplink/downlink decoupled mode.

According to an example, there is provided a small cell base station for a wireless telecommunications network, comprising: logic operable to receive a power control message from a macro base station, the power control message indicating that an ignore power control message has been transmitted to a user equipment instructing the user equipment to ignore power control messages from the small cell base station.

In one example, the logic is operable, in response to the power control message, to prevent transmission of power control messages to the user equipment.

In one example, the logic is operable to continue to transmit power control messages to the user equipment after receiving an indication from the macro base station that it has instructed the user equipment to ignore power control messages from the small cell base station. In this way, the small cell base station can still transmit messages to the user equipment as it "knows" that the user equipment will ignore them. This means that it may be quicker to resume the normal power control operation, since the user equipment can immediately react to an instruction from the macro base station to "react" to any received power control message from the small cell base station, without having to wait for the small cell base station to also be instructed to resume normal power control operation. Similarly, if the user equipment has been instructed to only react to received power control messages that do not reduce its transmission level below a specified threshold, the small cell base station can continue to send such messages.

In one example, the power control message includes an indication of a user equipment transmission power threshold amount and the logic is operable, in response to the power control message, to prevent transmission of power control messages to the user equipment when a transmission power of the user equipment reaches the user equipment transmission power threshold amount.

In one example, the logic is operable to determine whether an interference threshold relating to interference received from transmissions from the user equipment is exceeded and, if so, to transmit a message to the macro base station to indicate that the interference threshold has been exceeded.

In one example, the logic is operable, in response to a further power control message indicating that a restore power control message has been transmitted to the user equipment instructing the user equipment to respond to power control messages from the small cell base station, to resume transmission of power control messages to the user equipment.

According to a further example, there is provided a small cell base station method, comprising: receiving a power control message from a macro base station, the power control message indicating that an ignore power control message has been transmitted to a user equipment instructing the user equipment to ignore power control messages from the small cell base station.

In one example, the method comprises, in response to the power control message, preventing transmission of power control messages to the user equipment.

In one example, the method comprises continuing to transmit power control messages to the user equipment after receiving an indication from the macro base station that it has instructed the user equipment to ignore power control messages from the small cell base station.

In one example, the power control message includes an indication of a user equipment transmission power threshold amount and the method comprises, in response to the power control message, preventing transmission of power control messages to the user equipment when a transmission power of the user equipment reaches the user equipment transmission power threshold amount.

In one example, the method comprises determining whether an interference threshold relating to interference received from transmissions from the user equipment is exceeded and, if so, transmitting a message to the macro base station to indicate that the interference threshold has been exceeded.

In one example, the method comprises, in response to a further power control message indicating that a resume power control message has been transmitted to the user equipment instructing the user equipment to respond to power control messages from the small cell base station, resuming transmission of power control messages to the user equipment.

According to a further example, there is provided user equipment for a wireless telecommunications network, comprising: logic operable to receive an ignore power control message from a macro base station, the ignore power control message instructing the user equipment to ignore power control messages from another base station.

In one example, the ignore power control message instructs the user equipment to ignore power control messages from the another base station until the user equipment receives a restore power control message instructing the user equipment to respond to power control messages from the another base station.

In one example, the ignore power control message instructs the user equipment to ignore power control messages from the another base station until the user equipment receives an indication that the another base station is the user equipment's serving cell.

In one example, the ignore power control message instructs the user equipment to ignore power control messages from the another base station which would reduce its transmission power to below a specified threshold amount.

In one example, the logic is operable to receive a restore power control message to the user equipment instructing the user equipment to respond to power control messages from the another base station.

According to a further example, there is provided a user equipment method, comprising:
receiving an ignore power control message from a macro base station, the ignore power control message instructing the user equipment to ignore power control messages from another base station.

In one example, the ignore power control message instructs the user equipment to ignore power control messages from the another base station until the user equipment receives a restore power control message instructing the user equipment to respond to power control messages from the another base station.

In one example, the ignore power control message instructs the user equipment to ignore power control messages from the another base station until the user equipment receives an indication that the another base station is the user equipment's serving cell.

In one example, the ignore power control message instructs the user equipment to ignore power control messages from the another base station which would reduce its transmission power to below a specified threshold amount.

In one example, the method comprises receiving a restore power control message to the user equipment instructing the user equipment to respond to power control messages from the another base station.

According to a further aspect, there is provided a computer program product operable, when executed on a computer, to perform the method steps of the second, fourth or sixth aspects.
Further particular and preferred aspects are set out in the accompanying independent and dependent claims. Features of the dependent claims may be combined with features of the independent claims as appropriate, and in combinations other than those explicitly set out in the claims.
Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a simple HetNet;
Figure 2 provides an illustration of an uplink-downlink imbalance region; and
Figures 3 and 4 illustrate the operation of an example HetNet according to embodiments.

### DESCRIPTION OF THE EMBODIMENTS

### Overview

Before discussing the embodiments in any more detail, first an overview will be provided. Embodiments provide a technique whereby a base station, such as a macro base station, is able to prevent user equipment which is configured to accept power control messages from another base station from accepting those power control messages and changing its transmission power when the quality of the transmissions received from the user equipment by the macro base station fails to achieve a desired quality threshold.

In particular, a mechanism is provided in the network which allows the macro base station to counter any issues it detects with the uplink signal received from a user equipment when that user equipment is in the uplink-downlink imbalance region and so is either in soft handover with a macro cell and a small cell, or has its uplink and downlink power control decoupled. This mechanism provides a cooperative approach between the macro cell and the small cell to manage the user equipment's uplink transmission power efficiently.

Logic is provided within the macro base station that determines whether the quality of the uplink signal received from user equipment falls below a configurable threshold and that the user equipment is currently decoupled or is in soft handover. The quality may have fallen because the user equipment's uplink transmission power may have been set too low as a result of transmission power control (TPC) messages from the associated small cell base station and, hence, the macro cell base station will take action to prevent the quality of the received uplink signal from falling further. This helps to mitigate any issues that the macro cell base station might encounter with not being able to receive feedback on the quality of the downlink being received by the user equipment from the macro cell (such feedback being provided on the uplink).

### Power Control Messages

In one embodiment, the macro cell base station sends a message (ignore power control message) to the user equipment to request that it temporarily ignores any TPC messages that it receives from the small cell base station and instead only responds to TPC messages received from the macro cell base station. When the user equipment's uplink signal returns to sufficient quality again, then the macro cell base station can send another message (restore power control message) to the user equipment to request that it reverts to the normal process of reacting to any TPC messages that it receives (including those from the small cell base station). The message sent from the macro cell base station to the user equipment may be an HS-SCCH order.

### Informing Small Cell Base Station

At the same time as sending a message to the user equipment requesting that it temporarily ignores any TPC messages that it receives from the small cell base station, the macro cell base station may also inform the relevant small cell base station that it has temporarily instructed the user equipment to ignore TPC messages from that small cell base station. This makes the small cell base station aware that any subsequent increase in the user equipment's uplink transmission power detected by the small cell base station is due to specific actions that the macro cell base station is taking to mitigate issues that the macro cell base station is experiencing with the user equipment's uplink signal and, hence, the small cell base station can ignore its current signal to interference ratio (SIR) target.

Similarly, the macro base station will also inform the small cell base station when it instructs the user equipment to revert to the normal inner loop power control (ILPC) process and the small cell base station can then start to manage the appropriate SIR target for the user equipment. It will be appreciated that the SIR target in the small cell can be different to that in the macro cell (for example, the small cell will typically have an SIR target that is higher than that of the macro cell to limit the amount of power reduction by the small cell on the user equipment).

The messages sent between the macro base station and the small cell base station would be sent from the macro base station hosting the macro cell to its radio network controller (RNC) and then directly from the RNC to the small cell base station hosting the small cell (if the small cell base station is deployed with an Iub interface). Alternatively, the RNC would send the request across the Iur interface to the small cell gateway, which then sends the message on to the small cell base station across the Iurh interface (if the small cell base station is deployed within an Iuh network architecture).

### Small Cell Base Station Feedback

In one embodiment, a mechanism is provided whereby, after the macro base station has indicated to the small cell base station that it has requested that a user equipment temporarily ignore TPC messages from the small cell, the small cell base station can subsequently indicate back to the macro cell base station if it experiences a high level of interference (for example, a high rise over thermal (RoT)) from the user equipment. Thus, the macro base station can be made aware of issues that it might be causing by excessively increasing the user equipment's uplink transmission power.

The macro base station, hence, may be able to reduce the user equipment's uplink transmission power so that whilst it is above the required quality threshold, the delta above this threshold is lower than the macro cell base station's ideal target, but by taking such an action the macro cell base station can mitigate any issues that it might be indirectly causing to the small cell. Alternatively, the macro cell base station may determine that it cannot increase the user equipment's uplink transmission power sufficiently to meet its required target without causing excessive interference to the small cell and, hence, it may then determine that it is necessary to trigger a serving cell change to handover the user equipment to the small cell and to allow the small cell to become the serving cell for the user equipment.

### Power Control Message - Restore on Cell Change

In one embodiment, the macro cell base station sends a message to the user equipment to request that it ignores any power control messages that it receives from the specified small cell and instead only reacts to power control messages received from the macro cell. In that embodiment, the macro cell base station also indicates to the user equipment in the message that it ignores power control messages from the small cell until such time as either the macro cell is removed from the user equipment's active set or the relevant small cell becomes the serving cell for the user equipment. This provides the user equipment with an autonomous trigger to react to future power control messages from the small cell, without the macro cell base station having to explicitly send another message (restore power control message) to the user equipment. As in the previous embodiments, the macro cell base station can also indicate to the small cell base station that it has taken this action and, additionally, the small cell base station can also provide feedback to the macro cell base station in case the small cell base station subsequently experiences excessive interference.

### Power Control Message - Minimum Threshold

In one embodiment, the macro cell base station will determine the minimum uplink transmission power that the user equipment should use to ensure that the macro base station receives uplink transmissions with the required quality. This can be achieved by the macro cell base station estimating the required increase in the user equipment's uplink transmission power relative to the power that the user equipment is currently using to provide the macro cell base station with an uplink signal that is above the required quality threshold. The macro cell base station then sends a message to the user equipment to request that it does not reduce its uplink transmission power below a value that is calculated from the value currently used by the user equipment plus an additional delta value calculated and signalled by the macro cell base station. Hence, the user equipment will then ignore any messages it receives from the small cell base station to reduce its transmission power if such reduction would mean that the user equipment uplink transmission power would be below that required by the macro cell base station. As before, the macro cell base station can also inform the small cell base station that it has sent such information to the user equipment, so that the small cell base station is aware of the delta increase in the user equipment's uplink transmission power and, hence, the small cell base station can use this information to make a prediction of how much a subsequent increase in the user equipment's uplink transmission power will impact the interference experienced by the small cell base station and, hence, whether the increased interference is likely to plateau or to continue to increase and, thus, the small cell base station is provided with information that it can use to determine whether it will need to inform the macro base station about excessive interference that the small cell is experiencing.

### First Example Operation

In this example, illustrated in Figure 3, a simple universal mobile telecommunications system (UMTS) heterogeneous network (HetNet) arrangement is provided composed of a small cell, a small cell gateway (HNB-GW) and a macro cell (BTS). The user equipment enters the uplink-downlink imbalance region between the small cell and the macro cell and is configured to be in soft handover with the macro cell and small cell. The following steps then occur:
1. The user equipment that is attached to the macro base station roams towards the small cell and, at a certain point, is configured to be in soft handover, with the macro cell being its serving cell and the small cell being a non-serving cell.
2. The small cell starts to control the user equipment's uplink transmission power and issues a number of TPC messages to reduce the power (commonly referred to as "power down") as the user equipment moves towards the small cell.
3. At some point later, the user equipment's uplink transmission power has been reduced so that the quality of the user equipment's uplink signal at the macro cell is below a configured threshold. The macro cell determines that because the user equipment is in the uplink-downlink imbalance region, the small cell has reduced the user equipment's uplink transmission power too low and it therefore takes ameliorative action.
4. In this example, the ameliorative action taken by the macro cell base station is to request that the user equipment ignores any power control messages that it receives from the small cell.
5. The macro base station also informs the relevant small cell base station that it has requested that the user equipment temporarily ignores any TPC messages from that small cell (ignore power control message).
6. The macro base station then sends a request to the user equipment to increase its transmission power.
7. The user equipment's uplink signal received by the macro base station subsequently rises above the required threshold and, hence, the macro base station sends a new message (restore power control message) to the user equipment indicating that it can resume normal power control mode and therefore react to TPC messages received from any cell, including the small cell controlling the user equipment's uplink grant allocation.
8. At the same time, the macro base station also indicates the situation to the small cell base station so that the small cell base station can then start to manage its SIR target.

### Second Example Operation

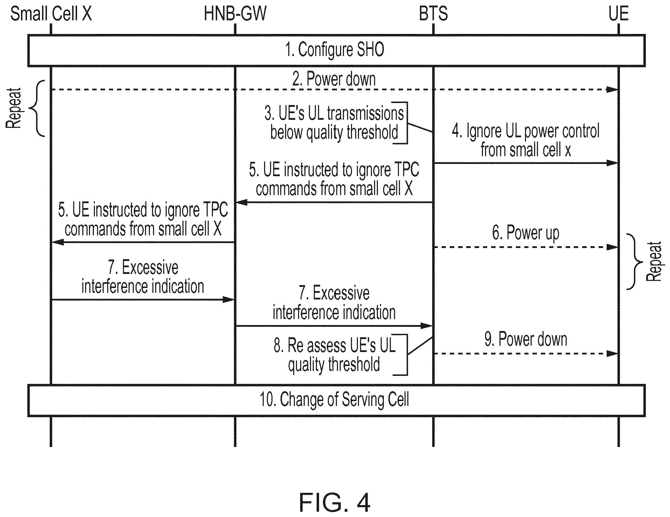

This example, illustrated in Figure 4, also assumes the simple UMTS HetNet arrangement mentioned above. Again, the user equipment enters the uplink-downlink imbalance region between the small cell and the macro cell and is configured to be in soft handover with the macro cell and small cell. The following steps then occur:
1. The user equipment that is attached to the macro cell moves towards the small cell and, at a certain point, is configured to be in soft handover with the macro cell being its serving cell and the small cell being a non-serving cell.
2. The small cell base station starts to control the user equipment's uplink transmission power and issues a number of TPC messages to reduce the power as the user equipment moves towards the small cell.
3. At some point later, the user equipment's uplink transmission power has been reduced so that the quality of the user equipment's uplink signal at the macro base station is below a configured threshold. The macro base station determines that because the user equipment is in the uplink-downlink imbalance region, the small cell has reduced the user equipment's uplink transmission power to low and it therefore takes ameliorative action.
4. In this example, the ameliorative action taken by the macro base station is to request that the user equipment ignore any power control messages that it receives from the specified small cell (ignore power control message).
5. The macro base station also informs the relevant small cell base station that it has requested that the user equipment temporarily ignores TPC messages from the small cell.
6. The macro base station then sends repeated requests to the user equipment to increase its transmission power.
7. The small cell base station detects an excessive increase in the interference that it is experiencing and determines that it is likely to be caused by the action taken by the macro base station. Hence, the small cell base station indicates to the macro base station that it is experiencing an excessive level of interference.
8. The macro base station determines whether it can lower the quality threshold that is the target for the user equipment's uplink transmissions.
9. In this example, the macro base station determines that it cannot reduce the threshold without the user equipment's uplink transmission quality falling to an unacceptably low level. The macro base station therefore instructs the user equipment to reduce its transmission power (often referred to as power-down).
10. The macro base station then triggers a change of serving cell to the small cell, so that the small cell base station can instead manage the user equipment and, hence, the user equipment exits soft handover.

Accordingly, it can be seen that embodiments show how power control of a user equipment that is in the uplink-downlink imbalance region and is either in soft handover or has its uplink and downlink decoupled can be managed by HetNet network elements to ensure that the cell controlling the user equipment's downlink transmission has adequate feedback from the user equipment on the quality of the downlink transmissions.

Unlike previous approaches this does not require power control from the small cell to be disabled for user equipment in soft handover, which is not ideal as it requires the RNC to manage the power control options at both the macro cell and small cell that configured the uplink-downlink imbalance region for the user equipment. In contrast, in embodiments, the macro cell base station and small cell base station can cooperatively control the user equipment's transmission power. Even when the macro cell base station instructs the user equipment to ignore commands from the small cell, the macro cell base station will allow the small cell base station to start cooperatively controlling the user equipment's power control once the macro cell base station has managed to set the user equipment's power such that it can detect the user equipment's uplink with sufficient quality.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A macro base station (BTS) for a wireless telecommunications network, comprising:
power control logic operable to determine whether user equipment (UE) supported by a macro cell provided by said macro base station is configured to accept power control messages from both said macro base station and another base station and that a quality of transmissions received from said user equipment by said macro base station fails to exceed a quality threshold and, if so, to transmit an ignore power control message to said user equipment instructing said user equipment to ignore power control messages from said another base station.

2. The macro base station of claim 1, wherein said ignore power control message instructs said user equipment to ignore power control messages from said another base station until said user equipment receives a restore power control message instructing said user equipment to respond to power control messages from said another base station.

3. The macro base station of claim or 2, wherein said ignore power control message instructs said user equipment to ignore power control messages from said another base station until said user equipment receives an indication said another base station is said user equipment's serving cell.

4. The macro base station of any preceding claim, wherein said ignore power control message instructs said user equipment to ignore power control messages from said another base station which would reduce its transmission power to below a specified threshold amount.

5. The macro base station of any preceding claim, wherein said power control logic is operable, when it is determined said quality of transmissions received from said user equipment by said macro base station exceed said quality threshold, to transmit a restore power control message to said user equipment instructing said user equipment to respond to power control messages from said another base station.

6. The macro base station of any preceding claim, wherein said power control logic is operable to transmit an indication of said ignore power control message to said another base station.

7. The macro base station of any preceding claim, wherein said power control logic is operable, in response to receipt of a message from said another base station indicating that said another base station is suffering from interference from said user equipment, to determine whether transmission power of said user equipment can be reduced and, if so, to transmit a reduce power control message to said user equipment.

8. The macro base station of any one of claims 1 to 6, wherein said power control logic is operable, in response to receipt of a message from said another base station indicating that said another base station is suffering from interference from said user equipment, to determine whether transmission power of said user equipment can be reduced and, if not, to initiate handover to said another base station.

9. The macro base station of any preceding claim, wherein said power control logic is operable to determine that said user equipment is configured to accept power control messages from both said macro base station and another base station when said user equipment is operating in at least one of a soft handover and uplink/downlinl decoupled mode.

10. A macro base station (BTS) method, comprising:
determining whether user equipment (UE) supported by a macro cell provided by said macro base station is configured to accept power control messages from both said macro base station and another base station and that a quality of transmissions received from said user equipment by said macro base station fails to exceed a quality threshold and, if so, transmitting (4) an ignore power control message to said user equipment instructing said user equipment to ignore power control messages from said another base station.

11. A computer program product operable, when executed on a computer, to perform the method steps of claim 10.

## Patentansprüche

1. Makro-Basisstation (BTS) für ein drahtloses Telekommunikations-Netzwerk, umfassend:
Leistungssteuerungslogik, die betriebsfähig ist, um zu bestimmen, ob ein Teilnehmergerät (UE), das von einer Makrozelle unterstützt wird, die von der besagten Makro-Basisstation bereitgestellt wird, ausgelegt ist, um Leistungssteuerungsnachrichten sowohl von der besagten Makro-Basisstation als auch einer weiteren Basisstation anzunehmen, und dass eine Qualität von Übertragungen, die von dem besagten Teilnehmergerät durch die besagte Makro-Basisstation empfangen werden, einen Qualitätsgrenzwert nicht übersteigt, und um, wenn das so ist, eine Nichtbeachtungs-Leistungssteuerungsnachricht an das besagte Teilnehmergerät zu senden, die dem besagten Teilnehmergerät befiehlt, Leistungssteuerungsnachrichten von der besagten weiteren Basisstation nicht zu beachten.

2. Makro-Basisstation nach Anspruch 1, wobei die besagte Nichtbeachtungs-Leistungssteuerungsnachricht dem besagten Teilnehmergerät befiehlt, Leistungssteuerungsnachrichten von der besagten weiteren Basisstation nicht zu beachten, bis das besagte Teilnehmergerät eine Wiederherstellungs-Leistungssteuerungsnachricht empfängt, die dem besagten Teilnehmergerät befiehlt, auf Leistungssteuerungsnachrichten von der besagten weiteren Basisstation zu antworten.

3. Makro-Basisstation nach Anspruch 1 oder 2, wobei die besagte Nichtbeachtungs-Leistungssteuerungsnachricht dem besagten Teilnehmergerät befiehlt, Leistungssteuerungsnachrichten von der besagten weiteren Basisstation nicht zu beachten, bis das besagte Teilnehmergerät einen Hinweis empfängt, dass die besagte weitere Basisstation die bedienende Zelle des besagten Teilnehmergeräts ist.

4. Makro-Basisstation nach einem beliebigen Anspruch, wobei die besagte Nichtbeachtungs-Leistungssteuerungsnachricht dem besagten Teilnehmergerät befiehlt, Leistungssteuerungsnachrichten von der besagten weiteren Basisstation nicht zu beachten, die ihre Übertragungsleistung auf unterhalb eines bestimmten Grenzwerts verringern würde.

5. Makro-Basisstation nach einem beliebigen Anspruch, wobei die besagte Leistungssteuerungslogik betriebsfähig ist, um, wenn bestimmt wird, dass die besagte Qualität von Übertragungen, die von dem besagten Teilnehmergerät durch die besagte Makro-Basisstation empfangen werden, den Qualitätsgrenzwert übersteigt, eine Wiederherstellungs-Leistungssteuerungsnachricht an das besagte Teilnehmergerät zu senden, die dem besagten Teilnehmergerät befiehlt, auf Leistungssteuerungsnachrichten von der besagten weiteren Basisstation zu antworten.

6. Makro-Basisstation nach einem beliebigen Anspruch, wobei die besagte Leistungssteuerungslogik betriebsfähig ist, um einen Hinweis über die besagte Nichtbeachtungs-Leistungssteuerungsnachricht an die besagte weitere Basisstation zu senden.

7. Makro-Basisstation nach einem beliebigen Anspruch, wobei die besagte Leistungssteuerungslogik betriebsfähig ist, um, als Reaktion auf den Empfang einer Nachricht von der besagten weiteren Basisstation, die angibt, dass die besagte weitere Basisstation unter einer Störung von dem besagten Teilnehmergerät leidet, zu bestimmen, ob die Übertragungsleistung des besagten Teilnehmergeräts verringert werden kann und um, wenn das so ist, eine Verringerungs-Leistungssteuerungsnachricht an das besagte Teilnehmergerät zu senden.

8. Makro-Basisstation nach einem beliebigen der Ansprüche 1 bis 6, wobei die besagte Leistungssteuerungslogik betriebsfähig ist, um, als Reaktion auf den Empfang einer Nachricht von der besagten weiteren Basisstation, die angibt, dass die besagte weitere Basisstation unter einer Störung von dem besagten Teilnehmergerät leidet, zu bestimmen, ob die Übertragungsleistung des besagten Teilnehmergeräts verringert werden kann und um, wenn das nicht so ist, eine Übergabe an die besagte weitere Basisstation einzuleiten.

9. Makro-Basisstation nach einem beliebigen Anspruch, wobei die besagte Leistungssteuerungslogik betriebsfähig ist, um zu bestimmen, dass das besagte Teilnehmergerät ausgelegt ist, um Leistungssteuerungsnachrichten sowohl von der besagten Makro-Basisstation als auch einer weiteren Basisstation anzunehmen, wenn das besagte Teilnehmergerät in mindestens einem aus Soft-Handover- und Uplink/Downlink-Entkopplungs-Modus funktioniert.

10. Verfahren für eine Makro-Basisstation (BTS), umfassend:
Bestimmen, ob ein Teilnehmergerät (UE), das von einer Makrozelle unterstützt wird, die von der besagten Makro-Basisstation bereitgestellt wird, ausgelegt ist, um Leistungssteuerungsnachrichten sowohl von der besagten Makro-Basisstation als auch einer weiteren Basisstation anzunehmen, und dass eine Qualität von Übertragungen, die von dem besagten Teilnehmergerät durch die besagte Makro-Basisstation empfangen werden, einen Qualitätsgrenzwert nicht übersteigt, und, wenn das so ist, Senden (4) einer Nichtbeachtungs-Leistungssteuerungsnachricht an das besagte Teilnehmergerät, die dem besagten Teilnehmergerät befiehlt, Leistungssteuerungsnachrichten von der besagten weiteren Basisstation nicht zu beachten.

11. Computerprogrammprodukt, das betriebsfähig ist, um bei Ausführung auf einem Computer die Verfahrensschritte nach Anspruch 10 durchzuführen.

## Revendications

1. Station de base macro (BTS) pour un réseau de télécommunication sans fil, comprenant :
une logique de commande de puissance permettant de déterminer si un équipement utilisateur (UE) pris en charge par une macrocellule fournie par ladite station de base macro est configuré pour accepter des messages de commande de puissance provenant de ladite station de base macro et d'une autre station de base et qu'une qualité de transmissions reçues à partir dudit équipement utilisateur par ladite station de base macro ne parvient pas à dépasser un seuil de qualité et, si tel est le cas, de transmettre un message pour ignorer la commande de puissance audit équipement utilisateur donnant audit équipement utilisateur l'ordre d'ignorer les messages de commande de puissance provenant de ladite autre station de base.

2. Station de base macro selon la revendication 1, dans laquelle ledit message pour ignorer la commande de puissance donne audit équipement utilisateur l'ordre d'ignorer les messages de commande de puissance provenant de ladite autre station de base jusqu'à ce que ledit équipement utilisateur reçoive un message de restauration de la commande de puissance donnant audit équipement utilisateur l'ordre de répondre aux messages de commande de puissance provenant de ladite autre station de base.

3. Station de base macro selon la revendication 1 ou 2, dans laquelle ledit message pour ignorer la commande de puissance donne audit équipement utilisateur l'ordre d'ignorer les messages de commande de puissance provenant de ladite autre station de base jusqu'à ce que ledit équipement utilisateur reçoive une indication que ladite autre station de base est la cellule en service dudit équipement utilisateur.

4. Station de base macro selon l'une quelconque des revendications précédentes, dans laquelle ledit message pour ignorer la commande de puissance donne audit équipement utilisateur l'ordre d'ignorer les messages de commande de puissance provenant de ladite autre station de base qui réduiraient sa puissance de transmission en dessous d'une quantité de seuil spécifiée.

5. Station de base macro selon l'une quelconque des revendications précédentes, dans laquelle ladite logique de commande de puissance permet, lorsqu'il est déterminé que ladite qualité de transmissions reçues à partir dudit équipement utilisateur par ladite station de base macro dépasse ledit seuil de qualité, de transmettre un message de restauration de la commande de puissance audit équipement utilisateur donnant audit équipement utilisateur l'ordre de répondre aux messages de commande de puissance provenant de ladite autre station de base.

6. Station de base macro selon l'une quelconque des revendications précédentes, dans laquelle ladite logique de commande de puissance permet de transmettre une indication dudit message pour ignorer la commande de puissance à ladite autre station de base.

7. Station de base macro selon l'une quelconque des revendications précédentes, dans laquelle ladite logique de commande de puissance permet, en réponse à la réception d'un message provenant de ladite autre station de base indiquant que ladite autre station de base subit les interférences dudit équipement utilisateur, de déterminer si la puissance de transmission dudit équipement utilisateur peut être réduite et, si tel est le cas, de transmettre un message de réduction de la commande de puissance audit équipement utilisateur.

8. Station de base macro selon l'une quelconque des revendications 1 à 6, dans laquelle ladite logique de commande de puissance permet, en réponse à la réception d'un message provenant de ladite autre station de base indiquant que ladite autre station de base subit les interférences dudit équipement utilisateur, de déterminer si la puissance de transmission dudit équipement utilisateur peut être réduite et, si tel n'est pas le cas, d'initier le transfert vers ladite autre station de base.

9. Station de base macro selon l'une quelconque des revendications précédentes, dans laquelle ladite logique de commande de puissance permet de déterminer que ledit équipement utilisateur est configuré pour accepter les messages de commande de puissance provenant de ladite station de base macro et d'une autre station de base lorsque ledit équipement utilisateur fonctionne dans un transfert intercellulaire sans coupure et/ou un mode découplé sur liaison montante/descendante.

10. Procédé de station de base macro (BTS), comprenant l'étape suivante :
déterminer si un équipement utilisateur (UE) pris en charge par une macrocellule fournie par ladite station de base macro est configuré pour accepter des messages de commande de puissance provenant de ladite station de base macro et d'une autre station de base et qu'une qualité de transmissions à partir dudit équipement utilisateur par ladite station de base macro ne parvient pas à dépasser un seuil de qualité et, si tel est le cas, transmettre (4) un message pour ignorer la commande de puissance audit équipement utilisateur donnant audit équipement utilisateur l'ordre d'ignorer les messages de commande de puissance provenant de ladite autre station de base.

11. Produit de programme informatique permettant, lorsqu'il est exécuté sur un ordinateur, d'exécuter les étapes du procédé selon la revendication 10.
